# EUROPÄISCHE PATENTSCHRIFT

(11) **EP 0 766 616 B1**
(45) Veröffentlichungstag und Bekanntmachung des Hinweises auf die Patenterteilung: **16.12.1998**
(21) Anmeldenummer: 95921703.5
(22) Anmeldetag: 13.06.1995
(51) Int. Cl.: B29C 65/00, B65B 31/02

(54) **VORRICHTUNG ZUR HERSTELLUNG VON THERMISCHEN ISOLATIONSKÖRPERN**
DEVICE FOR PRODUCING HEAT INSULATING BODIES
DISPOSITIF POUR LA FABRICATION DE CORPS THERMIQUEMENT ISOLANTS

(30) Priorität: 21.06.1994 DE 4421625
(43) Veröffentlichungstag der Anmeldung: 09.04.1997
(73) Patentinhaber: Michaelis, Ralf, 80796 München (DE)
(72) Erfinder: Michaelis, Ralf, 80796 München (DE)
(74) Vertreter: Krause, Wolfgang
(86) Internationale Anmeldenummer: DE9500788
(87) Internationale Veröffentlichungsnummer: WO9535198

(56) Entgegenhaltungen:
- FR-A- 2 155 816
- US-A- 2 921 422
- US-A- 3 562 078
- US-A- 3 996 725
- US-A- 4 175 162

## Beschreibung

Die Erfindung betrifft eine Vorrichtung zur Herstellung von thermischen Isolationskörpern.

Thermische Isolationskörper, wobei der Innenraum evakuiert wird, sind allgemein bekannt. So werden unter anderem in den Offenlegungs- bzw. Patentschriften DE OS 26 52 295, DE OS 34 14 665, DE PS 36 30 399, DE OS 37 41 239, DE OS 38 43 907, DE OS 3940 649, DE OS 38 28 669, DE OS 39 15 170, DE OS 40 19 870 und DE OS 42 14 002 derartige thermische Isolationskörper beschrieben. In ihrer Grundstruktur weisen diese Lösungen denselben prinzipiellen Aufbau auf. Die thermische Isolierung basiert darauf, daß ein in sich abgeschlossener Körper oder Behälter einen Füllstoff verschiedenster Art aufweist und evakuiert wurde. Der Füllstoff dient dabei der Stabilität des evakuierten Isolationskörpers. In der Art des Füllstoffes unterscheiden sich im wesentlichen die aufgeführten Schriften. Die Form der evakuierten Isolationskörper kann dabei unterschiedlicher Art sein.

Die Schriften US 4 175 162 und US 4 268 581 beinhalten wärmehemmende Panele in Form von feuerisolierenden Glasscheibenstrukturen und deren Herstellung. Diese zeichnen sich dabei durch einen Schichtaufbau aus. In der US 4 175 162 werden diese Strukturen in einer evakuierten Kammer zusammengeführt und durch ein weiteres Evakuieren in der Phase des Zusammenfügens der einzelnen Schichten zusammengeführt. Es wird dabei ein Mehrkammersystem vorgeschlagen, wobei in den Vorbereitungskammern diese Strukturen vorgewärmt werden.

In den Schriften DE PS 40 40 144, EP 0 380 812 und US 3 996 725 werden Verfahren und Anordnungen beschrieben, die zu hermetischen Verpackungen von Substanzen führen, die nicht mit der Atmosphäre während des Füllvorganges in Berührung kommen sollen.

Dem der Erfindung nächstkommender Stand der Technik Stellt die US 3 996 725 dar. Diese beinhaltet eine Vorrichtung zur Abfüllung von festen oder flüssigen Materialien unter Vakuum in thermoplastische Behältnisse. In einer durch Schieber trennbaren Bearbeitungskammer werden diese Behälter unter Vakuum zugeführt, gefüllt und durch thermisches Verschmelzen mittels eines Heizstabes verschlossen. Dabei ist die Bearbeitungskammer mit mindestens einer vakuumerzeugenden Einrichtung verbunden. Weiterhin weist die Bearbeitungskammer ein Magazin für Verschlußkörper in Form von Deckeln auf, die mittels einer Vorrichtung auf eine vorgegebene Position gebracht werden. Danach wird jeweils ein Verschlußkörper auf die Füllöffnung des Behältnisses positioniert und mit diesem verschweißt. Greifer halten das Behältnis während des Verschließens in Position. Damit ist eine Rotation des Behältnisses während des Verschließens nicht möglich. Nach dem Verschluß des gefüllten Behältnisses fällt dieser aus der geöffneten Bearbeitungskammer heraus. Die Geometrie der Querschnitte sowohl der Behältnisse als auch des Raumes den die Bearbeitungskammer begrenzt sind gleich.

In der DE PS 40 40 144 wird ein Verfahren zum Abfüllen von in einem Sammelbehälter befindlichen, staubförmigen Material in einen mit diesem verbindbaren Aufnahmebehälter, z.B. Beutel sowie eine Vorrichtung zur Durchführung dieses Verfahrens beschrieben. Der Hauptaugenmerk dieser Schrift gilt dem Abfüllen staubförmiger Materialien, ohne daß Teile dieser Materialien in die Umwelt entweichen.

Gleichzeig wird der dabei gefüllte Kunststoffbeutel mit zwei gegenüberstehenden elektrisch beheizbaren und mechanisch aufeinander zubewegbaren Schweißschienen verschlossen. Nach Beendigung des Füllvorganges muß die Füllvorrichtung durch eine bewegbare Seitenwand geöffnet werden und der gefüllte Beutel wird durch einen leeren ausgetauscht.

Ein ähnliches Verfahren und eine ähnliche Anordnung wird in der EP 0 380 812 beschrieben. Dabei werden Großverpackungen bis 100 Liter speziell für Milchpulver innerhalb von Evakuierkammern gefüllt und verschlossen. Diese Lösung beschreibt einen diskontinuierlichen Füll- und Evakuiervorgang, der durch den Einsatz mehrerer Kammern insgesamt dann kontinuierlich vonstatten geht.

Die aufgeführten Schriften beinhalten Isolationskörper an sich bzw. Verfahren und Anordnungen zum Evakuieren und Abfüllen von staubförmigen oder fließfähigen Materialien in Kunststoffbehälter. Die Größe dieser Behälter ist dabei durch die Verwendung von Evakuierkammern oder Bearbeitungskammern sehr begrenzt. Aufgeführt sind Behälter bis zu einer Aufnahmefähigkeit von 100 Litern.

Damit sind diese Anordnungen nicht zur Herstellung von Isolationskörpern in Plattenform oder anderen Formaten mit größeren Abmessungen geeignet. Der Verschluß der Kunststoffbehälter basiert auf der thermischen Verschweißbarkeit des verwendeten Kunststoffes, so daß andere Materialien nicht bearbeitbar sind.

Der im Anspruch 1 angegebenen Erfindung liegt das Problem zugrunde, mit Hilfe einer Vorrichtung thermische Isolationskörper weitestgehend beliebiger Größe und Form mit evakuiertem und mindestens einem Füllkörper versehenen Innenraum an unterschiedlichsten Orten herzustellen.

Die mit der Erfindung erzielten Vorteile bestehen insbesondere darin, daß Isolationskörper beliebiger Größe und Form mit einem evakuierten Innenraum herstellbar sind. Der Isolationskörper sollte dabei aus einem thermisch nichtleitenden Rahmen, metallischen Wänden und einem der Stabilität des evakuierten Innenraumes dienenden vorzugsweise als Panel ausgeführten und aus einem thermisch nichtleitenden Material aufgebautem Füllstoff bestehen. Diese Füllstoffe sollten dabei vorzugsweise aus einem mikroporösen Material bestehen. Mit dem evakuierten Innenraum ergeben sich vor allem Vorteile dahingehend, daß die Lebensdauer des Isolationskörpers durch den Einsatz der Füllstoffe in einer evakuierten und hermetisch gegen die Umwelt abgeschlossenen Kammer wesentlich höher ist, wie es sich bei dem Einsatz von verschäumten Materialien durch ihre Feuchtigkeitsaufnahme aus der Umwelt derzeit darstellt. Gleichbedeutend ist damit natürlich eine wesentlich längere Lebensdauer des thermischen Isolationskörpers an sich bei gleichbleibenden Isolationsdaten. Zwangsläufig ergeben sich daraus weitere Vorteile, die vor allem darin bestehen, daß langfristig ein Energiespareffekt durch die gleichbleibenden Isolationsbedingungen auftritt, daß verschäumte Materialien nicht mehr zum Einsatz kommen und sich damit eine wesentliche Einsparung hinsichtlich ökologisch kritischer Chemikalien ergibt und daß sich die mit dieser Vorrichtung hergestellten thermischen Isolationskörper leicht entsorgen lassen. Die eingesetzten Füllstoffe können jederzeit wiederverwendet werden und die metallischen Wände sind jederzeit durch das Wiedereinbringen in den Rohstoffkreislauf wiederaufbereitbar. Diese Vorrichtung zeichnet sich weiterhin durch einen einfachen Aufbau aus, ist damit leicht in eine bestehende oder aufzubauende Fertigungslinie integrierbar und technologisch leicht zu beherrschen.

Vorteilhafte Ausgestaltungen der Erfindung sind in den Ansprüchen 2 bis 11 angegeben.

Der Anspruch 2 enthält eine Ausgestaltung des Deckelmagazins und dessen Befestigung auf einen durch einen translatorischen Antrieb verfahrbaren Schlitten.

Die Weiterbildungen nach den Ansprüchen 3 bis 5 beinhalten die speziellen Ausführungen des Handhabesystems für die Deckel. Dieses Handhabesystem besteht dabei entsprechend Anspruch 3 zweckmäßigerweise aus einem Greifer und einer vertikal bewegbaren Hubeinheit. Wie im Anspruch 4 aufgeführt, besteht der Greifer selbst aus zwei u-förmigen Halbschalen, die den Deckel im vollen Umfang umfassen, so daß dieser eindeutig auf der Wand des Isolationskörpers plaziert werden kann. Nach Anspruch 5 sind die u-förmigen Halbschalen dabei über mindestens zwei translatorische Antriebssysteme miteinander verkoppelt.

Die Weiterbildungen nach den Ansprüchen 6 bis 11 enthalten Varianten für die der festen und hermetischen Verbindung des Deckels mit dem thermischen Isolationskörper dienende Einrichtungen. Diese Einrichtung kann nach Anspruch 6 eine Elektronenstrahlkanone, nach Anspruch 8 eine Laserstrahlschweißanlage oder nach Anspruch 10 eine elektrische Schweißvorrichtung darstellen.

Beim Einsatz einer Elektronenstrahlkanone entsprechend Anspruch 6 wird gleichzeitig in die Bearbeitungskammer eine Einrichtung zur Elektronenstrahlüberwachung integriert. Zweckmäßigerweise wird die Elektronenstrahlkanone entsprechend Anspruch 7 mit einer weiteren vakuumerzeugenden Einrichtung versehen, da der Druck in der Bearbeitungskammer höher gewählt werden kann.

Der Laserstrahl muß entsprechen des Anspruches 9 über ein Spiegelsystem so geführt werden, daß die Außenkontur des Deckels mit der Wand des Isolationskörpers verbunden wird. Nach Anspruch 11 kann zur Verschließung auch eine elektrisch betriebene Kontaktelektrode zum Verschweißen des Deckels mit dem thermischen Isolationskörpers zum Einsatz kommen.

Ein Ausführungsbeispiel der Erfindung ist in der Zeichnung dargestellt und wird im folgenden näher beschrieben.

Es zeigen:
- Fig. 1: die Vorrichtung zur Herstellung von thermischen Isolationskörpern an einem Gestell fest montiert,
- Fig. 2: die Vorrichtung in einer Seitenansicht,
- Fig. 3: die geöffnete Bearbeitungskammer in einer Seitenansicht mit dem Deckelmagazin und dem dazugehörigem Handhabesystem,
- Fig. 4: die Draufsicht der geöffneten Bearbeitungskammer
und
- Fig. 5: der Greifer für den Deckel mit dem dazugehörigem Hubsystem und die Anordnung der translatorischen Antriebssysteme für die u-förmigen Halbschalen.

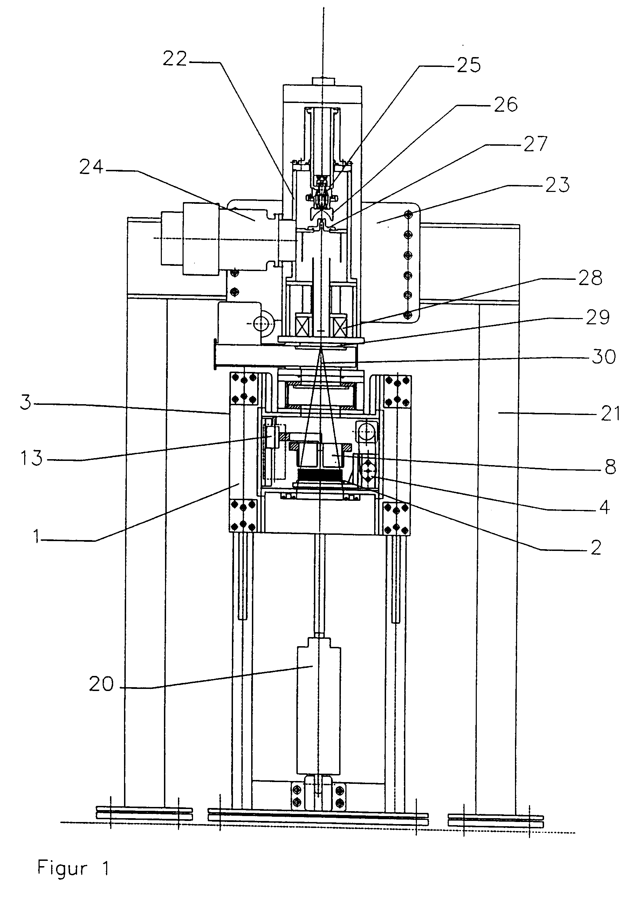

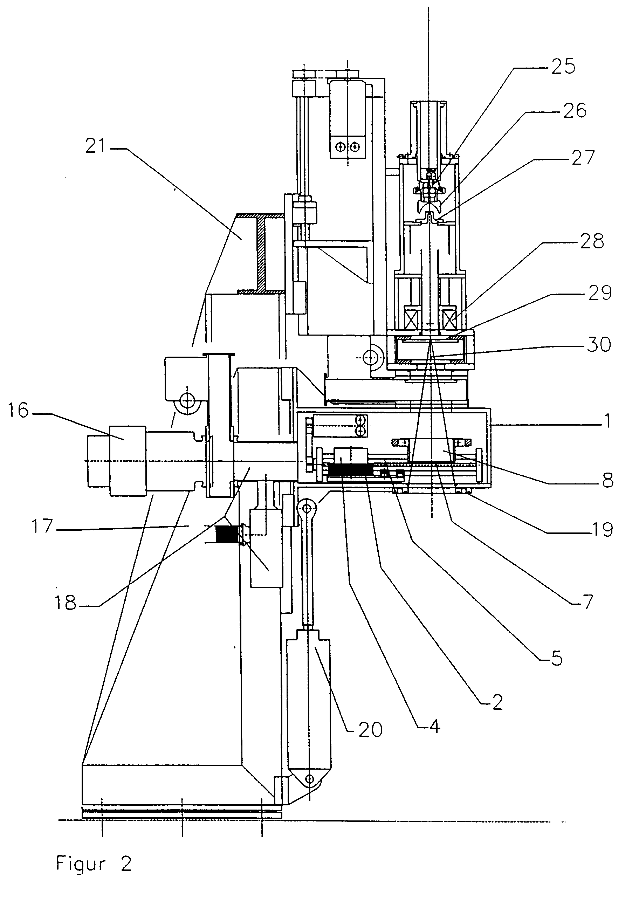

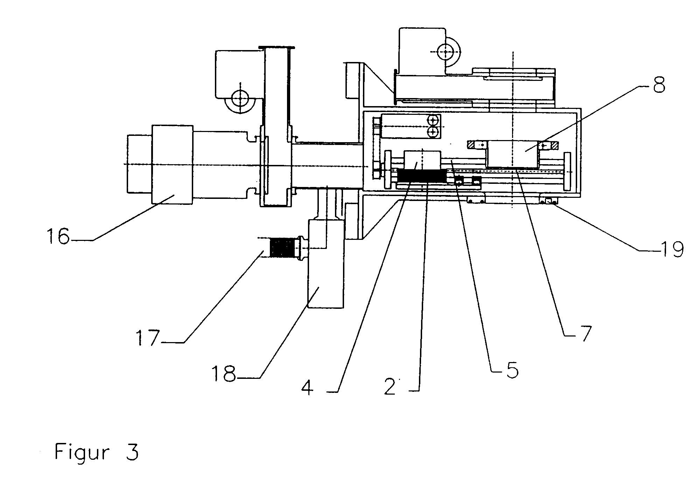

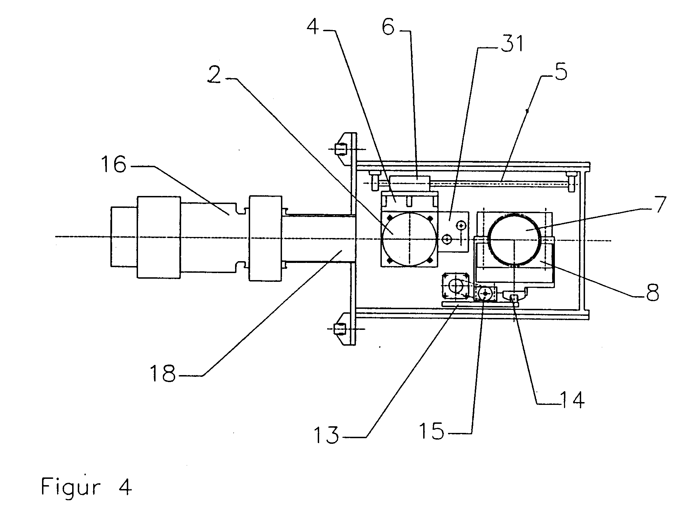

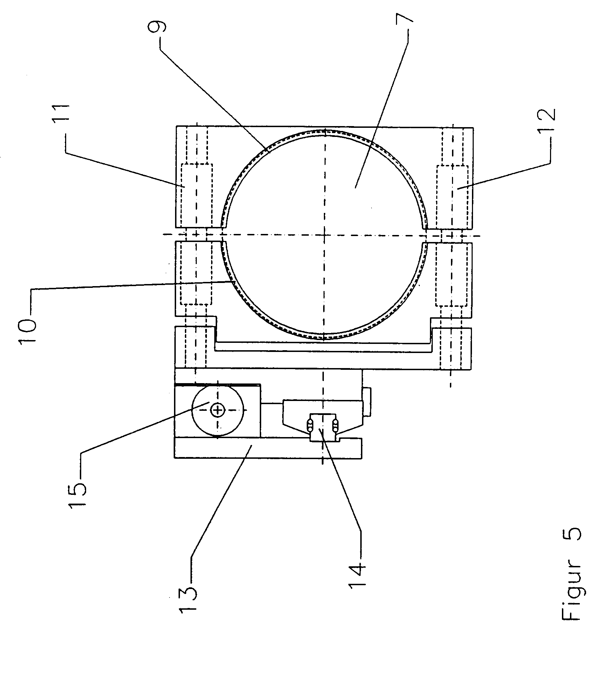

Nachstehend wird an Hand der Figuren 1 bis 5 ein erstes Ausführungsbeispiel näher erläutert. Diese zeigen dabei den Grundaufbau der Vorrichtung zur Herstellung von thermischen Isolationskörpern in Form von mehrschichtig aufgebauten Körpern, die vorzugsweise aus einem wärmeisolierenden Rahmen, metallischen Wänden und einem wärmeisolierenden Füllstoff, der weiterhin vorzugsweise im verpreßten Zustand als Panel lose zwischen den metallischen Wänden angeordnet ist, bestehen. An einem Gestell 21 ist eine evakuierbare und über einen Stellantrieb 19 vertikal bewegbare Bearbeitungskammer 1 befestigt. Das Vakuum wird dabei durch eine über eine Schleuse 18 angekoppelten Turbomolekularpumpe 16 erzeugt. Die Schleuse 18 und die Bearbeitungskammer 1 werden durch den Anschluß einer Drehschieberpumpe 17 mit einem Vorvakuum evakuiert. Dabei werden Evakuierzeiten von ca. 4 min pro 1 m² Isolationsfläche des thermischen Isolationskörpers erreicht. Die Dicke dessen liegt in der Größenordnung von 20 ... 30 mm.

In der Bearbeitungskammer 1 sind für die Deckel 7 ein Magazin 2 und ein Handhabesystem angeordnet. Das Magazin 2 nimmt eine Vielzahl von Deckeln 7 in loser Folge übereinandergestapelt auf. Es befindet sich auf einem Schlitten 4, der über eine Stangenführung 5 in horizontaler Richtung mittels eines translatorischem Stellmotors 6 zum Handhabesystem hin bewegt wird. Die Bearbeitungskammer 1 besitzt an der Seitenwand, die der Stangenführung 5 gegenüber liegt, eine Schleuse 18, so daß das leere Magazin 2 entnommen und das bestückte eingebracht werden kann.

Das Handhabesystem besteht aus einem Greifer 8, einer vertikal verstellbaren Hubeinheit 13 und zwei translatorischen Antrieben 11 und 12 für den Greifer 8. Dieser besteht aus zwei u-förmigen Halbschalen 9 und 10, die mittels der beiden translatorischen Antriebe 11 und 12 zueinander hin oder voneinander weg bewegt werden. Die Deckel 7 werden mit dem gesamten Magazin 2 unter den Greifer 8 gefahren, wobei sich die vertikale Hubeinheit 13 an der oberen Position befindet. Danach erfolgt durch den Greifer 8 die Entnahme eines Deckels 7 vom Magazin 2, wobei die vorher geöffneten u-förmigen Halbschalen 9 und 10 zusammengeführt werden. Diese weisen an der Unterkante über den gesamten Umfang eine Aussparung auf, so daß der Deckel 7 an der Kante horizontal vixiert und durch die u-förmigen Halbschalen 9 und 10 über den gesamten Umfang des Deckels 7 umfaßt wird. Die vertikale Hubeinheit 13 besteht dabei aus einer Führung 14 und einem translatorischen Antrieb 15. Dadurch ist eine eindeutige Positionierung des Deckels 7 gewährleistet und dieser wird somit eindeutig auf der an der Bearbeitungskammer 1 fixierten metallischen Wand des thermischen Isolationskörpers abgesetzt. Die Länge des Greifers 8 entspricht dabei mindestens der Dicke des Bodens der Bearbeitungskammer 1 einschließlich einer an der Öffnung angebrachten Flansches 19 für das Andrücken des thermischen Isolationskörpers. Damit erfolgt eine lösbare Ankopplung des thermischen Isolationskörpers an die Bearbeitungskammer 1. Über eine Öffnung in einer Wand des thermischen Isolationskörpers, die durch den Flansch 19 an der Bearbeitungskammer 1 aufgenommen wird und die kleiner als der Deckel 7 ausgeführt ist, wird dessen Innenraum mit dem der Bearbeitungskammer 1 verbunden. Mit der Evakuierung der Bearbeitungskammer 1 erfolgt somit eine gleichzeitige Evakuierung des Innenraumes des thermischen Isolationskörpers.

In der oberen Deckenplatte der Bearbeitungskammer 1 und in der Symmetrieachse des positionierten Deckels 7 befindet sich eine weitere Öffnung. Darüber wird eine Elektronenstrahlkanone angekoppelt. Dadurch wird der positionierte Deckel 7 mit dem thermischen Isolationskörper unter Vakuum verschweißt. Der Deckel 7 schließt die Öffnung in der Wand des thermischen Isolationskörpers und damit ist der Innenraum evakuiert.

In der Bearbeitungskammer 1 ist an dem verfahrbaren Magazin 2 gleichzeitig eine Einrichtung zur Elektronenstrahlüberwachung 31 angebracht. Diese Überwachung erfolgt entweder über eine Meßdose, die außerhalb der Bearbeitungskammer 1 ausgewertet wird, oder über eine direkte Strahlbeobachtung mittels einer CCD-Kamera.

Die Elektronenstrahlkanone besteht prinzipiell aus den Einrichtungen Katodenwechselpatrone 25, Steuerelektrode 26, Anode 27, Fokussierlinie 28 und Ablenksystem 29. An diese ist eine weitere Vakuumpumpe 24 angeschlossen.

Die Elektronenstrahlkanone arbeitet mit einer Beschleunigungsspannung von min. 30 kV und max. 60 kV. Damit wird eine Elektronenstrahlstromleistung von 4 ... 6 kW erreicht.

Zwei unterschiedliche Vakuumpumsysteme 16 und 17 bzw. 24 sind notwendig, da der Druck in der Elektronenstrahlkanone um zwei 10er Potenzen geringer, als der für die Bearbeitungskammer 1 notwendige ist. Die Elektronenstrahlkanone weist einen Arbeitsdruck von 5 * 10⁻⁴ mbar und die Bearbeitungskammer 1 einschließlich des thermischen Isolationskörpers von 5 * 10⁻² mbar auf. Diese unterschiedlichen Druckverhältnisse dienen in der Elektronenstrahlkanone als Strahlerzeugerraum zum Katodenoxidationsschutz und der elektrischen Isolation zwischen Katode und Anode 27. Bis der Elektronenstrahl 30 durch Stoßvorgänge mit den Luftmolekülen gestreut wird, reicht ein höherer Druck in der Bearbeitungskammer 1 einschließlich der Strahlauftreffstelle aus.

Durch den Einsatz der Elektronenstrahlschweißanlage werden korrosionsbeständige Eisen- bzw. Stahlwerkstoffe miteinander verschweißt, so daß sich die Lebensdauer des thermischen Isolationskörpers wesentlich erhöht.

An der gesamten Vorrichtung bestehend aus Bearbeitungskammer 1 und Elektronenstrahlkanone ist die für das Betreiben der Elektronenstrahlkanone notwendige elektrische und elektronische Ansteuerung 23 integriert.

Ein zweites Ausführungsbeispiel wird realisiert, indem an Stelle der Elektronenstrahlkanone eine Laserstrahlschweißanlage an die Bearbeitungskammer angekoppelt wird. Diese besteht prinzipiell aus dem lasererzeugenden Medium in Form eines CO₂- Lasers-, Fokussier- und Führungsspiegelsystemen. Eine Kühlung dieser Spiegelsysteme erfolgt über thermisch an diese angekoppelte und rohrförmige Kühlschlangen, die mit einem Kühlmedium - z.B. Wasser - durchströmt werden. Der Aufbau der restlichen Vorrichtung gleicht dem ersten Ausführungsbeispiel. Damit erfolgt eine Verschweißung zwischen dem thermischen Isolationskörper und dem Deckel 7 mittels Laserstrahlen.

In einem dritten Ausführungsbeispiel wird eine elektrische Schweißvorrichtung für das Fügen des Deckels 7 auf einer metallischen Wand des thermischen Isolationskörpers eingesetzt. Dazu wird eine auf dem posltionierten Deckel 7 aufsetzbare Bügelelektrode, die als Widerstand in einem Stromkreis geschalten ist, mittels eines vertikal verfahrbaren Schlittens aufgesetzt. Mit der Schließung des Stromkreises erwärmt sich die Bügelelektrode bis zum Schmelzpunkt der eingesetzten Metalle für den Deckel 7 und der Wand des thermischen Isolationskörpers und es folgt eine Verschweißung dieser Teile.

Weitere Ausführungsbeispiele zeichnen sich dadurch aus, daß die Lösungen entsprechend der drei aufgeführten Ausführungsbeispiele nicht an einem festen Gestell 21, sodern an einer verfahrbaren Einrichtung befestigt sind. Am effektivsten ist dabei die Montage der gesamten Vorrichtung zur Herstellung von thermischen Isolationskörpern an einem Industrieroboterarm. Damit ist es möglich, daß bereits montierte thermische Isolationskörper bzw. solche mit beliebigem Aussehen evakuiert verschlossen werden.

In weiteren Ausführungsbeispielen sind die Einrichtungen 22 zur festen und hermetischen Verbindung des Deckels 7 mit dem thermischen Isolationskörper an einer verfahrbaren Einrichtung - z.B. einem Roboterarm - befestigt. In einer technologischen Bearbeitungskette werden mindestens drei Bearbeitungskammern 1 angeordnet, wobei die Bearbeitungsschritte:
- Entfernung eines evakuierten thermischen Isolationskörpers und Ankopplung eines nichtevakuierten;
- Vorevakuierung und
- Verschweißung des Deckels 7 mit dem evakuierten thermischen Isolationskörper
   gestaffelt nacheinander ablaufen.

In dieser einfachsten technologischen Kette ist nur eine der in den ersten Ausführungsbeispielen aufgeführten Einrichtung 22 zur festen und hermetischen Verbindung des Deckels 7 mit dem thermischen Isolationskörper notwendig und diese kann kontinuierlich und damit effektiv eingesetzt werden.

## Patentansprüche

1. Vorrichtung zur Herstellung von thermischen Isolationskörpern in Form von mehrschichtig aufgebauten Körpern, die vorzugsweise aus einem wärmeisolierenden Rahmen, metallischen Wänden und einem wärmeisolierendem Füllstoff, der weiterhin vorzugsweise im verpreßtem Zustand als Panel lose zwischen den metallischen Wänden angeordnet ist, bestehen, mit einer Bearbeitungskammer, die mit mindestens einer vakuumerzeugenden Einrichtung verbunden ist und ein Magazin mit vorzugsweise runden Deckeln und ein für die Entnahme jeweils eines Deckels und auf eine vorgegebene Position transportierendes Handhabesystem enthält, gekennzeichnet dadurch, daß die Bearbeitungskammer (1) eine zur Bestückung des gefüllten oder zur Entnahme des leeren Magazins (2) bestimmte Vakuumschleuse (3) aufweist, daß in der Symmetrieachse über dem positionierten Deckel (7) direkt und luftdicht mit der Bearbeitungskammer (1) ankoppelbar eine der festen und hermetischen Verbindung des Deckels (7) mit dem thermischen Isolationskörper dienende Einrichtung (22) angeordnet ist, daß in der Symmetrieachse des positionierten Deckels (7) auf der gegenüberliegenden Seite der Bearbeitungskammer (1) der insgesamt luftdicht abgeschlossene und nur mit einer Öffnung, die in allen Abmessungen kleiner als der Deckel (7) ausgeführt ist, versehene thermische Isolationskörper lösbar und luftdicht angekoppelt ist, so daß die vakuumerzeugenden Einrichtungen sowohl mit der Bearbeitungskammer (1) als auch durch die Öffnung des angekoppelten Isolationskörper mit diesem verbunden sind, daß die gesamte elektrische und elektronische Ansteuerung (23) der Vorrichtung an dieser angebracht ist und daß die Vorrichtung sowohl fest an einem Gestell (21) als auch an einem frei beweglichen Montagesystem befestigt ist.

2. Vorrichtung zur Herstellung von thermischen Isolationskörpern nach Anspruch 1, gekennzeichnet dadurch, daß eine Vielzahl von Deckeln (7) auf dem Magazin (2) lose übereinanderliegen und daß sich dieses auf einen in Richtung zur Bearbeitungsposition hin horizontal verfahrbarem Schlitten (4) befindet.

3. Vorrichtung zur Herstellung von thermischen Isolationskörpern nach Anspruch 1, gekennzeichnet dadurch, daß das Handhabesystem aus einem den Deckel (7) umfassenden Greifer (8) besteht, der an einer vertikal arbeitenden Hubeinheit (13) befestigt ist.

4. Vorrichtung zur Herstellung von thermischen Isolationskörpern nach Anspruch 3, gekennzeichnet dadurch, daß der Greifer (8) vorzugsweise aus zwei zueinander hin oder voneinander weg bewegbaren u-förmigen Halbschalen (9) und (10) besteht, so daß der Deckel (7) an dem unteren Ende und im vollen Umfang gehalten wird, daß die Länge der u-förmigen Halbschalen (9) und (10) mit gehaltenem Deckel (7) gleich der Dicke des Bodens der Bearbeitungskammer (1) einschließlich eines daran angebrachten Andruckflansches (19) ist.

5. Vorrichtung zur Herstellung von thermischen Isolationskörpern nach Anspruch 4, gekennzeichnet dadurch, daß die beiden u-förmigen Halbschalen (9) und (10) des Greifers (8) miteinander über mindestens zwei auf Anschlag translatorisch arbeitende Antriebssysteme (11) und (12) verkoppelt sind.

6. Vorrichtung zur Herstellung von thermischen Isolationskörpern nach Anspruch 1, gekennzeichnet dadurch, daß die der festen und hermetischen Verbindung des Deckels (7) mit dem thermischen Isolationskörper dienende Einrichtung (22) eine Elektronenstrahlkanone mit Anpassung und daß in der Bearbeitungskammer (1) eine Einrichtung zur Elektronenstrahlüberwachung (31) angeordnet ist.

7. Vorrichtung zur Herstellung von thermischen Isolationskörpern nach Anspruch 6, gekennzeichnet dadurch, daß eine zweite und mindestens aus einer bestehende vakuumerzeugende Einrichtung (24) an die Elektronenstrahlkanone angebracht und mit dieser luftdicht verbunden ist.

8. Vorrichtung zur Herstellung von thermischen Isolationskörpern nach Anspruch 1, gekennzeichnet dadurch, daß die der festen und hermetischen Verbindung des Deckels (7) mit dem thermischen Isolationskörper dienende Einrichtung (22) eine Laserstrahlschweißanlage einschließlich der Laserstrahlführung und der Laserstrahlfokussierung ist.

9. Vorrichtung zur Herstellung von thermischen Isolationskörpern nach Anspruch 8, gekennzeichnet dadurch, daß zur Laserstrahlführung und zur Laserstrahlfokussierung mindestens je ein zwangkühlbares Spiegelsystem vorhanden ist.

10. Vorrichtung zur Herstellung von thermischen Isolationkörpern nach Anspruch 1, gekennzeichnet dadurch, daß die der festen und hermetischen Verbindung des Deckels (7) mit dem thermischen Isolationskörper dienende Einrichtung (22) eine elektrische Schweißvorrichtung ist.

11. Vorrichtung zur Herstellung von thermischen Isolationskörpern nach Anspruch 10, gekennzeichnet dadurch, daß eine der Deckelgeometrie angepaßte, in einem elektrischen Stromkreis als Widerstand geschaltete und zum Isolationskörper hin vertikal verfahrbare Heizelektrode in der Einrichtung (22) zur festen und hermetischen Verbindung des Deckels (7) mit dem thermischen Isolationskörper angeordnet ist.

## Claims

1. Apparatus for the production of thermic insulators that have the form of multi-layer elements, preferably consisting of a heat-insulating frame, metallic walls and a heat-insulating filler material, the latter preferably being loosely arranged in molded state as a panel between said metallic walls, and a processing chamber that is connected to at least one vacuum-generating facility and contains a magazine that preferably holds round caps and a handling system for taking up one cap and conveying it to a preset position, characterized in that the processing chamber (1) comprises a vacuum lock (3) for loading the filled or taking out the empty magazine (2), and that a facility (22) for permanent and airtight joining of the cap (7) and the thermic insulator is placed in the axis of symmetry above the positioned cap (7) and can be coupled directly and airtight with the processing chamber (1), and that said thermic insulator, being hermetically sealed and having just one opening which in all its dimensions is smaller than the cap (7), is connected engagingly and disengagingly and airtight in the axis of symmetry of the positioned cap (7) on the opposite side of the processing chamber (1), so that the vacuum-generating facilities are connected both with the processing chamber (1) and with the docked-on insulator via its opening, that the whole electric and electronic driving circuitry (23) of the apparatus is attached to the apparatus, and that the apparatus is permanently attached to a rack (21) and to a freely movable mounting system.

2. Apparatus for the production of thermic insulators according to claim 1, characterized in that a multitude of caps (7) is loosely piled on top of each other on the magazine (2), and that said magazine is mounted on a slide (4) that can travel horizontally towards the processing direction.

3. Apparatus for the production of thermic insulators according to claim 1, characterized in that the handling system consists of a gripper (8) that embraces the cap (7) and is mounted to a vertically operating lifting unit (13).

4. Apparatus for the production of thermic insulators according to claim 3, characterized in that said gripper (8) preferably consists of two U-shaped shells (9) and (10) that can be moved towards and away from each other, so that the cap (7) is completely supported at its lower part, and that the length of the U-shaped shells (9) and (10) with the cap (7) they hold is equal to the thickness of the bottom of the processing chamber (1) including the press-on flange (19) attached to it.

5. Apparatus for the production of thermic insulators according to claim 4, characterized in that the two U-shaped shells (9) and (10) of the gripper (8) are interconnected via at least two drive systems (11) and (12) that operate in linear motion when a limit stop is reached.

6. Apparatus for the production of thermic insulators according to claim 1, characterized in that the facility (22) for permanent and airtight joining of the cap (7) and the thermic insulator is equipped with an electron gun and trimming system, and that an electron-beam monitoring system is placed in the processing chamber (1).

7. Apparatus for the production of thermic insulators according to claim 6, characterized in that a second vacuum-generating facility consisting of at least one vacuum-generating facility (24) is mounted to the electron gun in a hermetically sealed connection.

8. Apparatus for the production of thermic insulators according to claim 1, characterized in that the facility (22) for permanent and airtight joining of the cap (7) and the thermic insulator is a laser-beam welding system including laser-beam guiding and focusing facilities.

9. Apparatus for the production of thermic insulators according to claim 8, characterized in that at least one mirror system with ducted cooling is available for each one of the laser-beam guiding and focusing facilities.

10. Apparatus for the production of thermic insulators according to claim 1, characterized in that the facility (22) for permanent and airtight joining of the cap (7) and the thermic insulator is an electric welding apparatus.

11. Apparatus for the production of thermic insulators according to claim 10, characterized in that an applicator that is adjusted to the cap geometry and operates as a resistor in an electric circuit, and that can be moved in vertical direction towards the insulator, is placed in the facility (22) for permanent and airtight joining of the cap (7) and the thermic insulator.

## Revendications

1. Dispositif destiné à fabriquer des corps calorifuges sous forme de corps constitués de plusieurs couches, qui se composent de préférence d'un cadre calorifuge, de parois métalliques et d'un matériau de remplissage calorifuge, qui en outre est disposé en étant de préférence comprimé sous forme de panneau amovible entre les parois métalliques, avec une chambre de traitement, qui est reliée avec au moins un dispositif générateur de vide et qui contient un magasin avec de préférence des couvercles ronds et un système de manipulation transporteur dans une position prédéterminée et servant à retirer un couvercle à chaque fois, caractérisé en ce que la chambre de traitement (1) comporte un sas à vide (3) destiné à équiper le magasin plein ou à reprendre le magasin vide (2), en ce que un dispositif (22) servant à l'assemblage fixe et hermétique du couvercle (7) avec le corps calorifuge est disposé sur l'axe de symétrie au-dessus du couvercle positionné (7) pouvant être accouplé directement et hermétiquement avec la chambre de traitement (1), en ce que le corps calorifuge fermé hermétiquement dans son ensemble et uniquement muni d'une ouverture, qui est réalisée dans toutes les dimensions plus petite que le couvercle (7), est accouplé de façon hermétique et amovible sur l'axe de symétrie du couvercle positionné (7) sur le côté opposé de la chambre de traitement (1), de telle sorte que les dispositifs générateurs de vide sont raccordés tant avec la chambre de traitement (1) qu'avec le corps isolant par le biais de l'ouverture du corps isolant accouplé, en ce que l'ensemble de la commande électrique et électronique (23) du dispositif est installée sur celui-ci et en ce que le dispositif est fixé aussi bien fermement à un châssis (21) que sur un système de montage librement mobile.

2. Dispositif destiné à fabriquer des corps calorifuges selon la revendication 1, caractérisé en ce que plusieurs couvercles (7) se superposent sans fixation sur le magasin (2) et en ce que celui-ci se trouve sur un chariot se déplaçant horizontalement dans le sens de la position de travail (4).

3. Dispositif destiné à fabriquer des corps calorifuges selon la revendication 1, caractérisé en ce que le système de manipulation est constitué d'un préhenseur (8) entourant le couvercle (7) qui est fixé sur une unité de levage (13) fonctionnant à la verticale.

4. Dispositif destiné à fabriquer des corps calorifuges selon la revendication 3, caractérisé en ce que le préhenseur (8) est constitué de préférence de deux demi-enveloppes (9) et (10) en forme de U pouvant se rapprocher ou s'écarter l'une de l'autre de telle sorte que le couvercle (7) est maintenu sur toute sa portée et sur l'extrémité inférieure, en ce que la longueur des demi-enveloppes en forme de U (9) et (10) avec le couvercle maintenu (7) est égale à l'épaisseur du fond de la chambre de traitement (1) y compris d'une bride de serrage montée dessus (19).

5. Dispositif destiné à fabriquer des corps calorifuges selon la revendication 4, caractérisé en ce que les deux demi-enveloppes en forme de U (9) et (10) du préhenseur (8) sont accouplées l'une à l'autre par au moins deux systèmes d'entraînement (11) et (12) qui fonctionnent en suivant un mouvement de translation sur une butée.

6. Dispositif destiné à fabriquer des corps calorifuges selon la revendication 1, caractérisé en ce que le dispositif (22) servant à l'assemblage fixe et hermétique du couvercle (7) avec le corps calorifuge est un canon électronique avec une adaptation et en ce qu'un dispositif de contrôle du faisceau électronique (31) se trouve dans la chambre de traitement (1).

7. Dispositif destiné à fabriquer des corps calorifuges selon la revendication 6, caractérisé en ce qu'un deuxième dispositif générateur de vide (24), qui comporte au moins un appareil générateur de vide, est monté sur le canon électronique et est relié à celui-ci hermétiquement.

8. Dispositif destiné à fabriquer des corps calorifuges selon la revendication 1, caractérisé en ce que le dispositif (22) servant à l'assemblage fixe et hermétique du couvercle (7) avec le corps calorifuge est un poste à souder au laser comprenant le guidage du rayon laser et la focalisation du rayon laser.

9. Dispositif destiné à fabriquer des corps calorifuges selon la revendication 8, caractérisé en ce qu'il comporte au moins un système réflecteur à refroidissement forcé pour guider le rayon laser et un autre pour focaliser le rayon laser.

10. Dispositif destiné à fabriquer des corps calorifuges selon la revendication 1, caractérisé en ce que le dispositif (22) servant à l'assemblage fixe et hermétique du couvercle (7) avec le corps calorifuge est un dispositif de soudage électrique.

11. Dispositif destiné à fabriquer des corps calorifuges selon la revendication 10, caractérisé en ce qu'une électrode chauffante se déplaçant à la verticale par rapport au corps calorifuge, branchée comme résistance dans un circuit électrique et adaptée à la géométrie du couvercle se trouve dans le dispositif (22) pour l'assemblage fixe et hermétique du couvercle (7) avec le corps calorifuge.
